# EUROPEAN PATENT APPLICATION

(11) **EP 3 232 320 A1**
(43) Date of publication of application: **18.10.2017**
(21) Application number: 14909545.7
(22) Date of filing: 31.12.2014
(51) Int. Cl.: G06F 9/38

(54) **TRANSACTION CONFLICT DETECTION METHOD AND APPARATUS AND COMPUTER SYSTEM**

(71) Applicant: Huawei Technologies Co. Ltd., Shenzhen, Guangdong 518129 (CN)
(72) Inventor: XU, Jun, Shenzhen Guangdong 518129 (CN); ZHU, Guanyu, Shenzhen Guangdong 518129 (CN); LIU, Haiyan, Shenzhen Guangdong 518129 (CN)
(74) Representative: Gill Jennings & Every LLP
(86) International application number: PCT/CN2014/096043
(87) International publication number: WO 2016/106738

(57) **Abstract**

A method and an apparatus for detecting a transaction conflict and a computer system are provided. The method is applied to a computer system whose memory is a non-volatile memory NVM, where the memory includes at least two memory areas, and the at least two memory areas have different detection policies. In the method for detecting a transaction conflict, a memory controller receives addresses in at least two operation instructions of a first transaction, and determines memory areas to be accessed by the at least two operation instructions (205). Then, the memory controller executes, according to a first detection policy of a first memory area, conflict detection on at least one operation instruction that is to access the first memory area (210), and executes, according to a second detection policy of a second memory area, conflict detection on at least one operation instruction that is to access the second memory area (215), so as to obtain a conflict detection result of the first transaction according to conflict detection results of the at least two operation instructions (220).

## Description

### TECHNICAL FIELD

The present invention relates to the field of computer technologies, and in particular, to a method and an apparatus for detecting a transaction conflict and a computer system.

### BACKGROUND

A person skilled in the art knows that, in the prior art, synchronization between different threads, access to a shared resource, or the like is completed by using a lock mechanism. However, many problems exist in a lock-mechanism-based concurrency system. For example, protection for shared data can be implemented by using the lock mechanism, but it is difficult for an ordinary programmer to use a fine-granularity lock to implement an efficient concurrent application. In addition, the lock mechanism results in problems that affect efficiency and performance of the concurrent application, for example, deadlock and priority inversion.

To resolve the foregoing problems, a person skilled in the art proposed a transaction memory technology. A transaction memory is a manner of designing a concurrent program, and the transaction memory comes from a transaction concept in a database management system (Database manage system, DBMS). In a database management system, a transaction needs to meet features of atomicity, consistency, isolation, and durability. The atomicity means that operations in a transaction are all executed or none of the operations is executed. The consistency means that a database needs to be in a consistent state at any moment, that is, some preset conditions needs to be met. The isolation means a state in which a transaction cannot see an internal object involved in another unsubmitted transaction. The durability means that a change made by a submitted transaction to a database system needs to be permanent. A role of the atomicity of a transaction is similar to a role of the lock mechanism, which can implement synchronization between different threads.

In the prior art, a transaction memory is basically implemented on a level 1 or level 2 cache (cache) of the CPU. For example, a dedicated cache mechanism is added to the level 1 cache to implement transaction conflict detection and a transaction rollback mechanism. The transaction conflict detection is implemented based on a fixed detection granularity. For example, the conflict detection may be executed on a transaction based on an object granularity, a word granularity, or a byte granularity. However, in a file system, generally, there is a relatively large difference between access granularities of metadata and file data of the file system. If a detection granularity used when conflict detection is performed on a transaction is excessively coarse, much erroneous detection may occur. If a detection granularity used when conflict detection is performed on a transaction is excessively fine, more system resources are consumed.

### SUMMARY

According to a method and an apparatus for detecting a transaction conflict and a computer system provided in embodiments of the present invention, accuracy of detection can be improved on the basis of saving system resources.

According to a first aspect, an embodiment of the present invention provides a method for detecting a transaction conflict, where the method is applied to a computer system whose memory is a non-volatile memory NVM; the memory includes at least two memory areas; the at least two memory areas have different detection policies; the method is executed by a memory controller; and the method includes:
receiving at least two operation instructions of a first transaction, where each operation instruction of the first transaction carries an address;
determining, according to the addresses in the at least two operation instructions, memory areas to be accessed by the at least two operation instructions;
executing, according to a first detection policy of a first memory area of the at least two memory areas, conflict detection on at least one operation instruction that is to access the first memory area;
executing, according to a second detection policy of a second memory area of the at least two memory areas, conflict detection on at least one operation instruction that is to access the second memory area; and
obtaining a conflict detection result of the first transaction according to conflict detection results of the at least two operation instructions, where the conflict detection results of the at least two operation instructions include at least: a detection result of the at least one operation instruction that is to access the first memory area and a detection result of the at least one operation instruction that is to access the second memory area.

With reference to the first aspect, in a first possible implementation manner of the first aspect, the obtaining a conflict detection result of the first transaction according to conflict detection results of the at least two operation instructions includes:
if it is detected that an address range to which an address in one operation instruction of the at least two operation instructions of the first transaction belongs is the same as an address range to which an address in an operation instruction being executed by the computer system belongs, determining that the first transaction conflicts with a transaction that is being executed by the computer system; or
if it is detected that an address range to which the addresses in the at least two operation instructions of the first transaction belong is different from an address range to which an address in an operation instruction being executed by the computer system belongs, determining that the first transaction does not conflict with a transaction that is being executed by the computer system.

With reference to the first aspect or the first possible implementation manner of the first aspect, in a second possible implementation manner of the first aspect, the executing, according to a first detection policy of a first memory area of the at least two memory areas, conflict detection on at least one operation instruction that is to access the first memory area includes:
executing, by using a first bloom filter bloom filter that is set for the first memory area, conflict detection on an address in the at least one operation instruction that is to access the first memory area, where the first bloom filter includes a hash value of an address range to which an address in an operation instruction that is being executed by the computer system and that accesses the first memory area belongs, and the address range to which the address in the operation instruction that accesses the first memory area belongs is determined by a detection granularity of the first detection policy; and
the executing, according to a second detection policy of a second memory area of the at least two memory areas, conflict detection on at least one operation instruction that is to access the second memory area includes:
   executing, by using a second bloom filter that is set for the second memory area, conflict detection on an address in the at least one operation instruction that is to access the second memory area, where the second bloom filter includes a hash value of an address range to which an address in an operation instruction that is being executed by the computer system and that accesses the second memory area belongs; the address range to which the address in the operation instruction that accesses the second memory area belongs is determined by a detection granularity of the second detection policy; and the detection granularity of the second detection policy is different from the detection granularity of the first detection policy.

According to a second aspect, an embodiment of the present invention provides a computer system, where the computer system includes:
a processor, configured to send at least two operation instructions of a first transaction to a memory controller;
a memory, configured to store data, where the memory is a non-volatile memory; the memory includes at least two memory areas; and the at least two memory areas have different detection policies; and
the memory controller, configured to:
   receive the at least two operation instructions of the first transaction that are sent by the processor, where each operation instruction of the first transaction carries an address;
   determine, according to the addresses in the at least two operation instructions, memory areas to be accessed by the at least two operation instructions;
   execute, according to a first detection policy of a first memory area of the at least two memory areas, conflict detection on at least one operation instruction that is to access the first memory area;
   execute, according to a second detection policy of a second memory area of the at least two memory areas, conflict detection on at least one operation instruction that is to access the second memory area; and
   obtain a conflict detection result of the first transaction according to conflict detection results of the at least two operation instructions, where the conflict detection results of the at least two operation instructions include at least: a detection result of the at least one operation instruction that is to access the first memory area and a detection result of the at least one operation instruction that is to access the second memory area.

With reference to the second aspect, in a first possible implementation manner of the second aspect, the memory controller is specifically configured to:
if it is detected that an address range to which an address in one operation instruction of the at least two operation instructions of the first transaction belongs is the same as an address range to which an address in an operation instruction being executed by the computer system belongs, determine that the first transaction conflicts with a transaction that is being executed by the computer system; and
if it is detected that an address range to which the addresses in the at least two operation instructions of the first transaction belong is different from an address range to which an address in an operation instruction being executed by the computer system belongs, determine that the first transaction does not conflict with a transaction that is being executed by the computer system.

With reference to the second aspect or the first possible implementation manner of the second aspect, in a second possible implementation manner of the second aspect, the memory controller is specifically configured to:
execute, by using a first bloom filter bloom filter that is set for the first memory area, conflict detection on an address in the at least one operation instruction that is to access the first memory area, where the first bloom filter includes a hash value of an address range to which an address in an operation instruction that is being executed by the computer system and that accesses the first memory area belongs, and the address range to which the address in the operation instruction that accesses the first memory area belongs is determined by a detection granularity of the first detection policy; and
execute, by using a second bloom filter that is set for the second memory area, conflict detection on an address in the at least one operation instruction that is to access the second memory area, where the second bloom filter includes a hash value of an address range to which an address in an operation instruction that is being executed by the computer system and that accesses the second memory area belongs; the address range to which the address in the operation instruction that accesses the second memory area belongs is determined by a detection granularity of the second detection policy; and the detection granularity of the second detection policy is different from the detection granularity of the first detection policy.

According to a third aspect, an embodiment of the present invention provides an apparatus for detecting a transaction conflict, where the apparatus is applied to a computer system whose memory is a non-volatile memory NVM; the memory includes at least two memory areas; the at least two memory areas have different detection policies; and the apparatus includes:
a receiving module, configured to receive at least two operation instructions of a first transaction, where each operation instruction of the first transaction carries an address;
a determining module, configured to determine, according to the addresses in the at least two operation instructions, memory areas to be accessed by the at least two operation instructions;
a detection module, configured to execute, according to a first detection policy of a first memory area of the at least two memory areas, conflict detection on at least one operation instruction that is to access the first memory area; and execute, according to a second detection policy of a second memory area of the at least two memory areas, conflict detection on at least one operation instruction that is to access the second memory area; and
a processing module, configured to obtain a conflict detection result of the first transaction according to conflict detection results of the at least two operation instructions, where the conflict detection results of the at least two operation instructions include at least: a detection result of the at least one operation instruction that is to access the first memory area and a detection result of the at least one operation instruction that is to access the second memory area.

With reference to the third aspect, in a first possible implementation manner of the third aspect, the processing module is specifically configured to:
if it is detected that an address range to which an address in one operation instruction of the at least two operation instructions of the first transaction belongs is the same as an address range to which an address in an operation instruction being executed by the computer system belongs, determine that the first transaction conflicts with a transaction that is being executed by the computer system; and
if it is detected that an address range to which the addresses in the at least two operation instructions of the first transaction belong is different from an address range to which an address in an operation instruction being executed by the computer system belongs, determine that the first transaction does not conflict with a transaction that is being executed by the computer system.

With reference to the third aspect or the first possible implementation manner of the third aspect, in a second possible implementation manner of the third aspect, the detection module is specifically configured to:
execute, by using a first bloom filter bloom filter that is set for the first memory area, conflict detection on an address in the at least one operation instruction that is to access the first memory area, where the first bloom filter includes a hash value of an address range to which an address in an operation instruction that is being executed by the computer system and that accesses the first memory area belongs, and the address range to which the address in the operation instruction that accesses the first memory area belongs is determined by a detection granularity of the first detection policy; and
execute, by using a second bloom filter that is set for the second memory area, conflict detection on an address in the at least one operation instruction that is to access the second memory area, where the second bloom filter includes a hash value of an address range to which an address in an operation instruction that is being executed by the computer system and that accesses the second memory area belongs; the address range to which the address in the operation instruction that accesses the second memory area belongs is determined by a detection granularity of the second detection policy; and the detection granularity of the second detection policy is different from the detection granularity of the first detection policy.

According to a fourth aspect, an embodiment of the present invention provides a computer program product, including a computer-readable storage medium that stores program code, where an instruction included in the program code is used to execute the method of the foregoing first aspect.

In the method for detecting a transaction conflict provided in the embodiments of the present invention, according to that different operation instructions of a same transaction access different memory areas, different detection policies are used for different operation instructions of the same transaction to perform detection, and a conflict detection result of this transaction is determined according to conflict detection results of all operation instructions of the same transaction. Therefore, a balance between accuracy of detection and system resource consumption that is brought by a system for implementing conflict detection can be implemented, so that the accuracy of the conflict detection can be improved while reducing the system resource consumption.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention.
FIG. 1 is a schematic structural diagram of a computer system according to an embodiment of the present invention;
FIG. 2 is a schematic flowchart of a method for detecting a transaction conflict according to an embodiment of the present invention;
FIG. 3-A to FIG. 3-D are schematic diagrams of memory areas to be accessed by operation instructions of a transaction according to an embodiment of the present invention;
FIG. 4 is a schematic flowchart of another method for detecting a transaction conflict according to an embodiment of the present invention;
FIG. 5 is a schematic flowchart of another method for detecting a transaction conflict according to an embodiment of the present invention; and
FIG. 6 is a schematic structural diagram of an apparatus for detecting a transaction conflict according to an embodiment of the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely some but not all of the embodiments of the present invention.

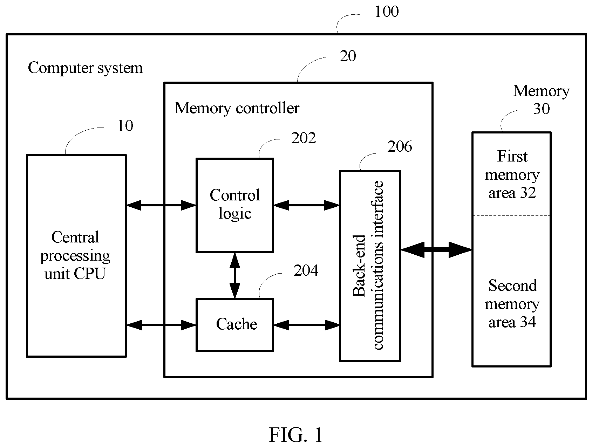

The method for detecting a transaction conflict provided in the embodiments of the present invention may be applied to a computer system whose memory is a non-volatile memory. FIG. 1 is a schematic structural diagram of a computer system according to an embodiment of the present invention. As shown in FIG. 1, a computer system 100 includes a central processing unit (Central Processing Unit, CPU) 10, a memory controller 20, and a memory 30. As shown in FIG. 1, the CPU 10 is a computation core (Core) and a control core (Control Unit) of the computer system 100. The CPU 10 may be an integrated circuit of an ultra-large scale. An operating system and another software program are installed in the CPU 10, so that the CPU 10 can access a memory, a cache, and a magnetic disk. It may be understood that, in this embodiment of the present invention, the CPU 10 is merely an example of a processor. In addition to the CPU 10, the processor may further be another application specific integrated circuit ASIC (Application Specific Integrated Circuit), or one or more integrated circuits configured to implement the embodiments of the present invention.

The memory controller (Memory Controller) 20 is a bus circuit controller that controls the memory 30 inside the computer system 100 and that is configured to manage and plan a data transmission speed from the memory 30 to the CPU 10. The memory 30 and the CPU 10 may exchange data by using the memory controller 20. The memory controller 20 may be a standalone chip, and is connected to the CPU 10 by using a system bus. A person skilled in the art may know that, the memory controller 20 may also be integrated into a related large chip. For example, the memory controller 20 may be integrated into a microprocessor (for example, the CPU 10) or is built into a northbridge. This embodiment of the present invention sets no limitation on a specific location of the memory controller 20. For ease of description, in a system architecture shown in FIG. 1, that the memory controller 20 is disposed separately is used as an example for description. The memory controller 20 controls necessary logic to write data into the memory 30 or read data from the memory 30.

As shown in FIG. 1, the memory controller 20 may include control logic 202, a cache 204, and a back-end communications interface 206. The control logic 202, the cache 204, and the back-end communications interface 206 complete mutual communication by using a communications bus. The cache 204 is a temporary memory between the CPU 10 and the memory 30. The cache 204 is configured to buffer a command and data that are to be written into the memory 30 by the control logic 202 or is configured to buffer data that is read from the memory 30. In this embodiment of the present invention, the cache 204 may also be constituted by a storage medium of a next generation non-volatile memory. For example, the cache 204 may be a magnetic random access memory (Magnetic Random Access Memory, MRAM).

The back-end communications interface 206 is configured to communicate with the memory 30. For example, the back-end communications interface 206 may be configured to manage an access command of the memory 30 delivered by the control logic 202 and perform data transmission. It may be understood that, the back-end communications interface 206 may include multiple communication channels, which are used to connect different memory areas of the memory 30.

The control logic 202 may be a central processing unit CPU, or an application specific integrated circuit (Application Specific Integrated Circuit, ASIC), or one or more integrated circuits configured to implement this embodiment of the present invention. The control logic 202 may implement an access request of the memory 30, or manage data of the memory 30, or the like. For example, the control logic 202 may receive, by using the communications bus, an access command for accessing the memory 30 that is sent by the CPU 10, and according to the access command, access the memory 30, write data into the memory 30, or read data from the memory 30 by using the back-end communications interface 206.

The memory 30 is a main memory of the computer system 100. The memory 30 is generally configured to store various software that is running in the operating system, and input and output data, information exchanged with an external storage, and the like. To increase an access speed of the CPU 10, the memory 30 needs to have an advantage of a high access speed. In a conventional computer system architecture, a dynamic random access memory (Dynamic Random Access Memory, DRAM) is generally used as the memory 30. With development of a non-volatile memory (Non-Volatile Memory, NVM) technology, an NVM is gradually used as a memory.

A person skilled in the art may know that a next generation NVM has features of a high access speed and non-volatility, and moreover, the next generation NVM can perform addressing by byte (Byte), and write data into a non-volatile storage medium on a per-bit (bit) basis. Therefore, when used as a memory, the next generation NVM can reduce latency (latency) of data access like a dynamic random access memory (Dynamic Random Access Memory, DRAM) does. In addition, compared with the DRAM, the NVM has non-volatility, and therefore can store data better. The next generation NVM may include a next generation non-volatile memory such as a phase change memory (Phase Change Memory, PCM), a resistive random access memory (Resistive Random Access Memory, RRAM), a magnetic random access memory (Magnetic Random Access Memory, MRAM), or a ferroelectric random access memory (Ferroelectric Random Access Memory, FRAM). In the computer system 100 provided in this embodiment of the present invention, the memory 30 is a non-volatile storage medium of a next generation non-volatile memory. A storage medium may include multiple storage units. In this embodiment of the present invention, a storage unit in the storage medium refers to a minimum storage medium unit used to store data. For example, the storage unit may include a phase change storage unit that constitutes a phase change memory, a magnetic storage unit that constitutes a magnetic random access memory, a resistive storage unit that constitutes a resistive random access memory, or the like.

In this embodiment of the present invention, the memory 30 may be divided into at least two memory areas according to a service requirement. For example, as shown in FIG. 1, the memory 30 is divided into a first memory area 32 and a second memory area 34. Different memory areas may be used to store data of different types. For example, when a file system is established in the memory 30, the first memory area 32 may be used to store metadata of this file system, and the second memory area 34 may be used to store file data. Certainly, it may be understood that, in addition to the first memory area 32 and the second memory area 34 that are shown in FIG. 1, the memory 30 may further include another memory area, which is not limited herein.

A person skilled in the art may know that, in the computer system 100 shown in FIG. 1, in a process of accessing the memory 30 by the CPU 10, a transaction memory technology may be used to ensure data consistency. To clearly describe this embodiment of the present invention, the following briefly describes concepts of a transaction and conflict detection of a transaction. A person skilled in the art may know that, a transaction memory mechanism is that each of different concurrently processed threads is processed as a transaction, so as to reduce programming complexity by using a transaction operation. The transaction is a concept originated from a transaction in a database and is a series of orderly read and write operations on a memory, where these operations are executed by a same thread. The transaction has atomicity, that is, operations in the transaction are all executed, or none of the operations is executed and the operations are rolled back to an initial state for re-execution. This feature of the transaction plays a role of a lock mechanism.

To implement the transaction memory mechanism, a computer system needs to have three basic functions: conflict detection, data version management, and a conflict resolution policy. A case of simultaneously accessing a same data item that may occur when concurrent transactions are running can be detected by using the conflict detection. If a conflict is detected, a corresponding conflict resolution policy needs to be used. Operations such as rollback need to be performed in a conflict resolving process; therefore, new data after modification and original data before modification need to be used, and saving of such data needs to be completed in the data version management.

This embodiment of the present invention mainly relates to transaction conflict detection in a transaction memory mechanism. In a conflict detection process, a detection granularity (granularity) is an assurance of implementing atomicity of a transaction. The detection granularity may include: an object granularity, a word granularity (word granularity), and a byte granularity (byte granularity). In the object granularity, decision of any conflict is made on an object basis. Even if memory blocks modified by two transactions are not coincident, it can be determined that the two transactions conflict, provided that the two transactions are in a same object. The word granularity and the byte granularity are granularities finer than the object granularity. For example, if one word is used as a granularity, even if objects modified by two transactions are the same, it is determined that the two transactions do not conflict, provided that words modified by the two transactions are different. Compared with the object granularity, in the two detection granularities of the word granularity and the byte granularity, conflict detection results are finer, which is better for improving transaction memory system performance. However, compared with conflict detection of the object granularity, conflict detection of the word granularity and the byte granularity consume more system resources.

To balance accuracy of detection and system resource consumption, this embodiment of the present invention proposes a conflict detection method that is based on a hybrid granularity. The method may be applied to the computer system 100 shown in FIG. 1. It may be understood that, FIG. 1 is only a schematic structural diagram of a computer system in which a next generation new NVM is used as a memory. A person skilled in the art may understand that, in an actual application, not only a next generation NVM can be used as a memory, but also a function of the next generation NVM can be extended to an existing external storage. According to this manner, when the next generation NVM is used as an external storage, if a CPU can be directly connected to an NVM controller, the NVM controller may also be executed according to the method in this embodiment of the present invention in a process in which transaction conflict detection needs to be executed.

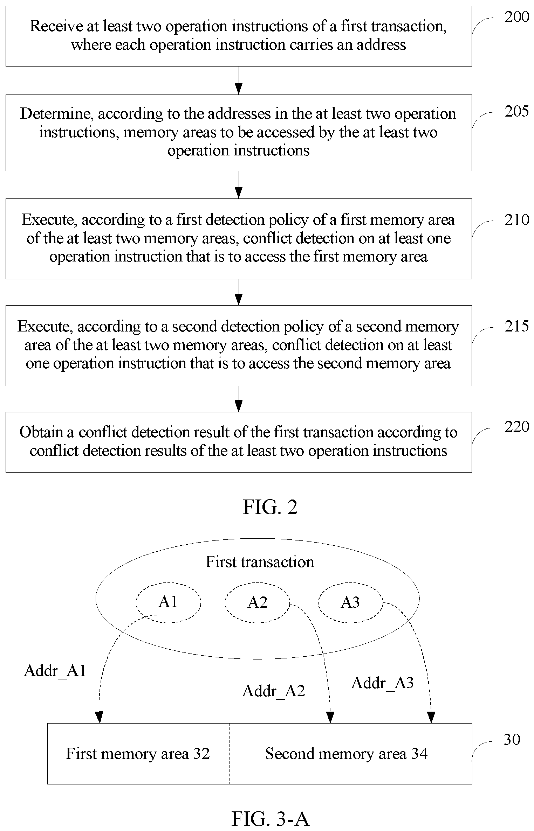

With reference to FIG. 1, the following describes in detail the method for detecting a conflict according to an embodiment of the present invention. FIG. 2 is a flowchart of a method for detecting a transaction conflict according to an embodiment of the present invention. As shown in FIG. 2, the method may include the following steps.

In step 200, a memory controller 20 receives at least two operation instructions of a first transaction, where each operation instruction carries an address. As described above, a transaction includes a series of read and write operations on a memory. In this embodiment of the present invention, for clear description, a first transaction, a second transaction, and a third transaction are used as an example to distinguish different transactions of multiple transactions. In this step, when the CPU 10 starts the first transaction, the control logic 202 in the memory controller 20 may receive the at least two operation instructions of the first transaction that are sent by the CPU 10. The at least two operation instructions may be read operation instructions used to read data from a memory 30, or may be write operation instructions used to write data into a memory 30. When a file system in the memory 30 needs to be accessed, the at least two operation instructions may further include an instruction used to start the file system. No specific limitation is set on a type of an operation instruction of the first transaction herein. It may be understood that, to access the memory 30, the at least two operation instructions carry addresses that are to access the memory 30.

In step 205, the memory controller 20 determines, according to the addresses in the at least two operation instructions, memory areas to be accessed by the at least two operation instructions. As shown in FIG. 1, in this embodiment of the present invention, the memory 30 may be divided into at least two memory areas according to an actual requirement. For ease of description, in this embodiment of the present invention, an example in which the memory 30 includes a first memory area 32 and a second memory area 34 is used for description. For example, if a capacity of the memory 30 is 4 GB, a part whose address range is 0000 0000h to 3FFF FFFFh is used as a first memory area, and a part whose address range is 4000 0000h to FFFF FFFFh is used as a second memory area.

It may be understood that, in an actual application, data of different types may be differently managed according to different memory areas. For example, when a file system is established in the memory 30, the first memory area 32 may be an area that stores metadata of the file system, and the second memory area 34 may be used to store file data of the file system.

In this embodiment of the present invention, after receiving the at least two operation instructions of the first transaction, the memory controller 20 may respectively determine, according to the addresses carried in the at least two operation instructions of the first transaction, memory areas of the memory 30 that are to be accessed by the at least two operation instructions. In an actual application, the memory controller 20 may first buffer the at least two operation instructions sent by the CPU 10 in the cache 204, and then respectively determine, according to the addresses carried in the at least two operation instructions of the first transaction, memory areas of the memory 30 that are to be accessed by the at least two operation instructions. For example, as shown in FIG. 3-A, a first transaction includes three operation instructions that access a memory 30: A1, A2, and A3. A1 includes an address Addr_A1, A2 includes an address Addr_A2, and A3 includes an address Addr_A3. The control logic 202 in the memory controller 20 may respectively determine, according to address ranges of different memory areas divided in the memory 30 and the addresses carried in the operation instructions, that a memory area to be accessed by the operation instruction A1 is a first memory area 32 and a memory area to be accessed by the operation instructions A2 and A3 is a second memory area 34. It should be noted that, in this embodiment of the present invention, an example in which the memory 30 is divided into two memory areas is used for description. In an actual application, a quantity of memory areas divided in the memory 30 may also be more than two, which is not limited herein.

In step 210, according to a first detection policy of a first memory area of the at least two memory areas, conflict detection is executed on at least one operation instruction that is to access the first memory area. For example, in a case shown in FIG. 3-A, the first detection policy may be used to execute conflict detection on the operation instruction A1 of the first transaction. A person skilled in the art may know that, the conflict detection is used to detect whether an address range to which an address in an operation instruction to be executed by the computer system belongs is the same as an address range to which an address in an operation instruction being executed by the computer system belongs. The address range is determined by a detection granularity. In other words, the conflict detection may be used to detect whether concurrent transactions, when running, may simultaneously access a same address range determined by the detection granularity. A case of simultaneously accessing a same data item that may occur when concurrent transactions are running may be detected by using the conflict detection, so as to determine whether the first transaction can be concurrently executed with another transaction that is being executed by the computer system. For example, it is assumed that a memory address is represented by 32 bits, the address Addr_A1 of the operation instruction A1 is 1000 0011h, and an address Addr_D1 of an operation instruction being executed by the computer system is 1000 0000h. In one case, if 1 byte is used as a detection granularity, because the Addr_A1 is different from the address Addr_D1, it is determined that the operation instruction A1 does not conflict with the operation instruction being executed by the computer system. In another case, if 64 bytes are used as a detection granularity, because an address range to which the Addr_A1 belongs is 1000 0000h to 1000 003Fh, an address range to which the Addr_D1 belongs is also 1000 0000h to 1000 003Fh. In other words, both the address Addr_A1 and the address Addr_D1 belong to a 32-bit address range whose base address is "1000 0000h". In this case, it may be determined that the address range to which the address Addr_A1 belongs is the same as the address range to which the address Addr_D1 belongs, so that it may be determined that the operation instruction A1 conflicts with the operation instruction being executed by the computer system.

It can be learned from the foregoing example that, in a conflict detection process, if a detection granularity is excessively fine, accuracy of a detection result is improved while more system resources are consumed. However, if a detection granularity is excessively coarse, although system resource consumption is reduced, accuracy of a detection result cannot be ensured. In this embodiment of the present invention, to balance a contradiction between accuracy of conflict detection and system consumption, different detection policies are set for different memory areas divided in the memory 30, where different detection policies use different detection granularities. For example, in one case, if a first memory area is used to store metadata of a file system, a second memory area is used to store file data of the file system. An access granularity of the metadata is smaller than an access granularity of the file data, and a data volume of the metadata is smaller than a data volume of the file data. Therefore, to improve access accuracy of the metadata, a conflict detection granularity that is set for the first memory area may be smaller than a conflict detection granularity that is set for the second memory area. For example, a detection granularity in a detection policy that is set for an operation command that accesses the first memory area may be 64 B (Byte), and a detection granularity in a detection policy that is set for an operation command that accesses the second memory area may be 4 KB (Byte). For ease of description, in this embodiment of the present invention, the detection policy that is set for the operation command that accesses the first memory area is referred to as a first detection policy of the first memory area, and the detection policy that is set for the operation command that accesses the second memory area is referred to as a second detection policy of the second memory area.

A person skilled in the art may know that, in a process of executing conflict detection, in one case, the address range to which the address in the operation instruction of the first transaction belongs may be directly compared with the address range to which the address in the operation instruction being executed by the computer system belongs, so as to determine whether this operation and another operation being executed may simultaneously access a same data item. If it is determined, by detection, that an address range to which an address in an operation instruction belongs is the same as an address range to which an address in an operation instruction being executed by the computer system belongs, it is considered that this operation and the operation being executed by the computer system may simultaneously access a same data item, that is, this operation conflicts with the operation being executed by the computer system. If it is determined, by detection, that an address range to which an address in an operation instruction belongs is different from an address range to which an address in an operation instruction being executed by the computer system belongs, it is considered that this operation does not conflict with the operation being executed by the computer system.

In an actual application, to improve efficiency of detection, conflict detection may be executed on each operation instruction of the first transaction by using a bloom filter (bloom filter). The bloom filter is generally used to detect whether an element is a member of a set. If a detection result is yes, the element is not necessarily in the set; if a detection result is no, the element is certainly not in the set. The bloom filter uses a method of a hash function to map an element to a point on an array with a length of m. When this point is 1, the element is in the set; otherwise, the element is not in the set. In this embodiment of the present invention, different conflict detection policies are set for operation instructions that access different memory areas. Therefore, the operation instructions that access different memory areas may be implemented by using different bloom filters, where different bloom filters have different detection granularities. Specifically, conflict detection on the operation instruction that accesses the first memory area 32 may be implemented by using a first bloom filter, and conflict detection on the operation instruction that accesses the second memory area 34 may be implemented by using a second bloom filter. The first bloom filter is used to execute the first detection policy, and the second bloom filter is used to execute the second detection policy. Because detection mechanisms of the first bloom filter and the second bloom filter are the same except that detection granularities are different, herein, with reference to FIG. 3-A, an example in which the conflict detection on the operation instruction that is to access the first memory area is implemented by using the first bloom filter is used for description.

As shown in FIG. 3-A, an operation instruction A1 of a first transaction needs to access a first memory area 32. The first bloom filter stores a hash value of an address range to which an address in an operation instruction of another transaction that is being executed by a computer system 100 and that can concurrently access the first memory area 32 belongs. For ease of description, in this embodiment of the present invention, a set of the hash value, stored in the first bloom filter, of the address range to which the address in the operation instruction of the another transaction that is being executed by the computer system 100 and that can concurrently access the first memory area 32 belongs may be referred to as an address set stored in the first bloom filter. As described above, conflict detection may be used to detect whether concurrent transactions, when running, may simultaneously access a same address range determined by a detection granularity. In a detection process, an address range to which an Addr_A1 belongs may be determined according to a detection granularity of the first detection policy. A hash value of the address range to which the Addr_A1 belongs may be compared with a hash value of the first bloom filter, to determine whether the operation instruction A1 can be concurrently executed with another operation instruction that is being executed by the computer system 100 and that accesses the first memory area 32. For example, it is assumed that a memory address is represented by 32 bits, the detection granularity of the first detection policy is 64 bytes, and the address Addr_A1 of the operation instruction A1 is 1000 0011h, it may be determined that the address range to which the Addr_A1 belongs is within a 32-bit address range whose base address is "1000 0000h". The 32-bit address range is 1000 0000h to 1000 003Fh. Then, hashing may be performed on "1000 0000h" to obtain a hash value of the address range to which the Addr_A1 belongs. The hash value of the address range to which the Addr_A1 belongs is compared with the hash value stored in the first bloom filter. If a detection result of the Addr_A1 by the first bloom filter is 1, it is considered that the operation instruction A1 conflicts with the another operation instruction that is being executed by the computer system 100 and that accesses the first memory area 32. If a detection result of the Addr_A1 by the first bloom filter is 0, it is considered that the operation instruction A1 does not conflict with the another operation instruction that is being executed by the computer system 100 and that accesses the first memory area 32.

In the foregoing conflict detection process, an example in which the first bloom filter performs hashing once is used for description. A person skilled in the art may know that, in an actual application, to improve accuracy, the first bloom filter may perform hashing multiple times on the address in the operation instruction A1, and determine, according to a hash value obtained after the multiple times of hashing, whether the operation instruction A1 conflicts with an operation instruction that is being executed by a computer system and that accesses a first memory area. This embodiment of the present invention sets no specific limitation on a mechanism for implementing the conflict detection by the first bloom filter and the second bloom filter.

In an actual application, the cache 204 may be divided into multiple cache areas according to different memory areas to be accessed. The multiple cache areas are used to buffer operation instructions that access different memory areas. For example, the operation instruction that accesses the first memory area may be buffered in a first cache area, and the operation instruction that accesses the second memory area is buffered in a second cache area. Then the first bloom filter is used to perform conflict detection on an operation instruction that is buffered in the first cache area, and the second bloom filter is used to perform conflict detection on an operation instruction that is buffered in the second cache area. This is not limited herein.

It may be understood that, the bloom filter is only an implementation manner of implementing conflict detection. In an actual application, another detection method such as a Cuckoo filter may further be used, which is not limited herein. A person skilled in the art may know that, purposes of various detection methods are to determine whether an address range to which an address in an operation instruction of a to-be-executed transaction belongs is the same as an address range to which an address in an operation instruction of a transaction being executed by a system belongs, so as to determine whether a conflict occurs between the transactions, where the address range is determined by a detection granularity.

In step 215, according to the second detection policy of the second memory area of the at least two memory areas, conflict detection is executed on at least one operation instruction that is to access the second memory area. For example, in a case shown in FIG. 3-A, the second detection policy may be used to execute conflict detection on the operation instructions A2 and A3 of the first transaction. A detection method in step 215 is similar to the detection method in step 210. For details, refer to detailed description of step 210, and details are not described herein.

In step 220, a conflict detection result of the first transaction is obtained according to conflict detection results of the at least two operation instructions. The conflict detection results of the at least two operation instructions include at least: a detection result of at least one operation instruction that is to access the first memory area and a detection result of at least one operation instruction that is to access the second memory area. In this embodiment of the present invention, because the operation instruction A1 of the first transaction needs to access the first memory area 32, the operation instructions A2 and A3 of the first transaction need to access the second memory area 34. After conflict detection is executed on the operation instruction A1 of the first transaction by using the first detection policy of the first memory area 32 and on the operation instructions A2 and A3 of the first transaction by using the second detection policy of the second memory area 34, in step 220, the memory controller 20 may obtain a conflict detection result of the first transaction according to conflict detection results of the operation instructions A1, A2, and A3.

Specifically, if it is detected that an address in one operation instruction of the at least two operation instructions of the first transaction is the same as an address in an operation instruction that is being executed by the computer system, it is determined that the first transaction conflicts with a transaction that is being executed by the computer system. If it is detected that the addresses in the at least two operation instructions of the first transaction are different from an address in an operation instruction that is being executed by the computer system, it is determined that the first transaction does not conflict with a transaction that is being executed by the computer system. For example, provided that a conflict detection result of any one of the operation instructions A1, A2, and A3 indicates a conflict, it is determined that the first transaction conflicts with another transaction being executed by the computer system 100. If the conflict detection results of the operation instructions A1, A2, and A3 all indicate no conflict, it is determined that the first transaction does not conflict with another transaction being executed by the computer system 100.

A person skilled in the art may know that, after conflict detection is executed on the first transaction, it may be determined, according to a detection result of the first transaction, whether to immediately execute the first transaction. For example, if the conflict detection result of the first transaction indicates a conflict, the first transaction needs to be executed only after another transaction that conflicts with the first transaction is completed. For example, a system may be rolled back to a state in which the first transaction is not started. If the conflict detection result of the first transaction indicates no conflict, it indicates that the first transaction can be concurrently executed with a transaction that is being executed by a system. According to this manner, the operation instructions A1, A2, and A3 of the first transaction may be immediately executed. Therefore, according to the operation instructions A1, A2, and A3, data may be written into the memory 30 or data may be read from the memory 30.

It may be understood that, in an actual application, when it is determined that the first transaction does not conflict with another transaction being executed by the computer system 100, a hash value of the Addr_A1 may be added to the first bloom filter, to update the address set of the first bloom filter, so that conflict detection is performed, by using an updated address set of the first bloom filter, on a subsequent operation instruction that is to access the first memory area 32. In addition, a hash value of the Addr_A2 and a hash value of the Addr_A3 may further be added to the second bloom filter, to update an address set of the second bloom filter, so that conflict detection is performed, by using an updated address set of the second bloom filter, on a subsequent operation instruction that is to access the second memory area 34.

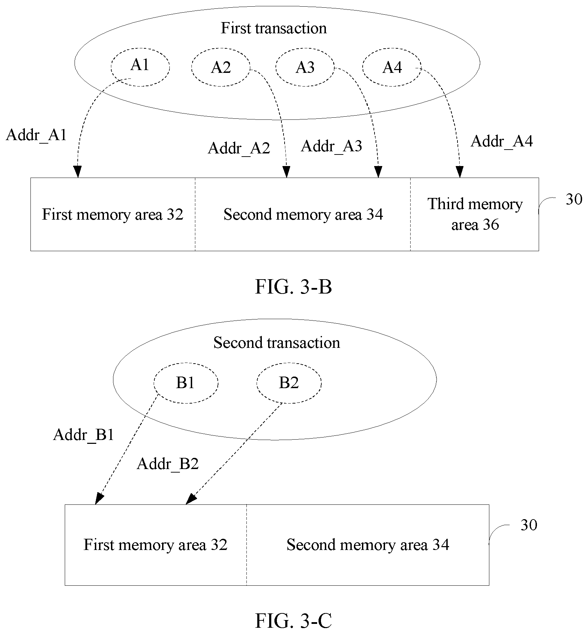

It may be understood that, in another case, in this embodiment of the present invention, the memory 30 may further be divided into more than two memory areas, and the first transaction may include another operation instruction in addition to the operation instructions A1, A2, and A3. For example, as shown in FIG. 3-B, the first transaction may include operation instructions A1, A2, A3, and A4, and the memory 30 may be divided into a first memory area 32, a second memory area 34, and a third memory area 36. The first detection policy is set for the first memory area 32, the second detection policy is set for the second memory area 34, and a third detection policy is set for the third memory area 36. All detection policies include different detection granularities. When conflict detection is executed on the first transaction, the first detection policy may be used to execute conflict detection on the operation instruction A1, the second detection policy is used to execute conflict detection on the operation instructions A2 and A3, the third detection policy is used to execute conflict detection on the operation instruction A4, and a conflict detection result of the first transaction is obtained according to conflict detection results of the operation instructions A1, A2, A3, and A4.

In the method for detecting a transaction conflict provided in this embodiment of the present invention, according to that memory areas that are accessed by different operation instructions of a same transaction are different, different detection policies are used for different operation instructions of the same transaction to perform detection, and a conflict detection result of the transaction is determined according to conflict detection results of all operation instructions of the same transaction. Therefore, a balance between accuracy of detection and system resource consumption that is brought by a system for implementing conflict detection can be implemented, so that the accuracy of the conflict detection can be provided while reducing the system resource consumption.

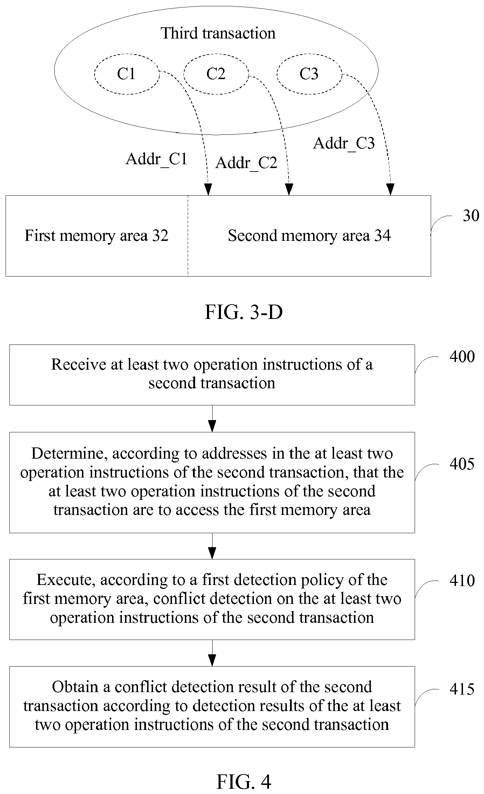

On the basis of the method for detecting a conflict provided in the embodiment shown in FIG. 2, this embodiment of the present invention may further include a method for detecting a conflict shown in FIG. 4. FIG. 4 is a flowchart of another method for detecting a conflict according to an embodiment of the present invention. As shown in FIG. 4, the method may further include the following steps on the basis of the method for detecting a conflict shown in FIG. 2.

In step 400, the memory controller 20 receives at least two operation instructions of a second transaction, where each operation instruction of the at least two operation instructions of the second transaction carries an address. For example, as shown in FIG. 3-C, the second transaction includes operation instructions B1 and B2, the operation instruction B1 carries an Addr_B1, and the operation instruction B2 carries an Addr_B2.

In step 405, the memory controller 20 determines, according to the addresses in the at least two operation instructions of the second transaction, that the at least two operation instructions of the second transaction are to access the first memory area. For example, as shown in FIG. 3-C, the memory controller 20 may determine, according to the Addr_B1 and the Addr_B2, that both the operation instructions B1 and B2 of the second transaction are to access the first memory area 32.

In step 410, the memory controller 20 executes conflict detection on the at least two operation instructions of the second transaction according to the first detection policy of the first memory area. Because the first detection policy is set for the first memory area, the memory controller 20 may execute conflict detection on the operation instructions B1 and B2 of the second transaction according to the first detection policy. The method for detecting a conflict in this step is similar to step 210 of the method shown in FIG. 2. For details, refer to description of step 210.

In step 410, the memory controller 20 obtains a conflict detection result of the second transaction according to detection results of the at least two operation instructions of the second transaction. For example, the memory controller may obtain the conflict detection result of the second transaction according to detection results of the operation instruction B1 and the operation instruction B2. Specifically, if the detection results of the operation instruction B1 and the operation instruction B2 both indicate no conflict, it is determined that the second transaction does not conflict with another transaction being executed by the computer system, and the second transaction may be concurrently executed with the another transaction being executed. If a detection result of one operation instruction in the detection results of the operation instruction B1 and the operation instruction B2 indicates a conflict, it is determined that the second transaction conflicts with another transaction being executed by the computer system, and the second transaction needs to be executed only after a transaction that conflicts with the second transaction is completed.

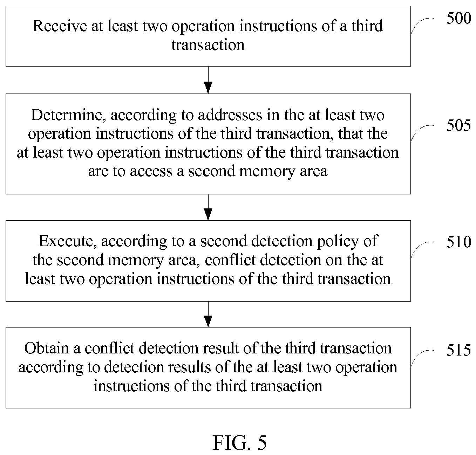

In yet another case, on the basis of the methods shown in FIG. 2 and FIG. 4, this embodiment of the present invention may further include a method for detecting a conflict shown in FIG. 5. FIG. 5 is a flowchart of another method for detecting a conflict according to an embodiment of the present invention. The following describes FIG. 5 with reference to FIG. 3-D. As shown in FIG. 5, on the basis of the methods for detecting a conflict shown in FIG. 2 and FIG. 4, the method may further include the following steps.

In step 500, a memory controller 20 receives at least two operation instructions of a third transaction, where each operation instruction of the at least two operation instructions of the third transaction carries an address. For example, as shown in FIG. 3-D, the third transaction includes operation instructions C1, C2, and C3, the operation instruction C1 carries an Addr_C1, the operation instruction C2 carries an Addr_C2, and the operation instruction C3 carries an Addr_C3.

In step 505, the memory controller 20 determines, according to the addresses in the at least two operation instructions of the third transaction, that the at least two operation instructions of the third transaction are to access the second memory area. For example, in a scenario shown in FIG. 3-D, the memory controller 20 may determine, according to the Addr_C1, the Addr_C2, and the Addr_C3, that the operation instructions C1, C2, and C3 all need to access the second memory area 34.

In step 510, the memory controller 20 executes, according to the second detection policy of the second memory area, conflict detection on the at least two operation instructions of the third transaction. Because the second detection policy is set for the second memory area, the memory controller 20 may execute conflict detection on the operation instructions C1, C2, and C3 of the third transaction according to the second detection policy. The method for detecting a conflict in this step is similar to step 210 of the method shown in FIG. 2. For details, refer to description of step 210.

In step 515, the memory controller 20 obtains a conflict detection result of the third transaction according to detection results of the at least two operation instructions of the third transaction. For example, the memory controller 20 may obtain the conflict detection result of the third transaction according to detection results of the operation instructions C1, C2, and C3. Specifically, if the detection results of the operation instructions C1, C2, and C3 all indicate no conflict, it is determined that the third transaction does not conflict with another transaction being executed by the computer system, and the third transaction may be concurrently executed with the another transaction being executed. If a detection result of one operation instruction in the detection results of the operation instructions C1, C2, and C3, it is determined that the third transaction conflicts with another transaction being executed by the computer system, and the third transaction needs to be executed only after a transaction that conflicts with the third transaction is completed.

In the method for detecting a conflict in this embodiment of the present invention, detection policies of different detection granularities can be set for different memory areas, and detection policies that need to be used for performing conflict detection on operation instructions of different transactions can be determined according to memory areas that are to be accessed by operation instructions of different transactions. Therefore, a detection policy can be dynamically selected according to a specific access requirement, achieving more flexible implementation. In addition, a balance between accuracy of detection and system resource consumption that is brought by a system for implementing conflict detection can be implemented, so that the accuracy of the conflict detection can be provided while reducing the system resource consumption.

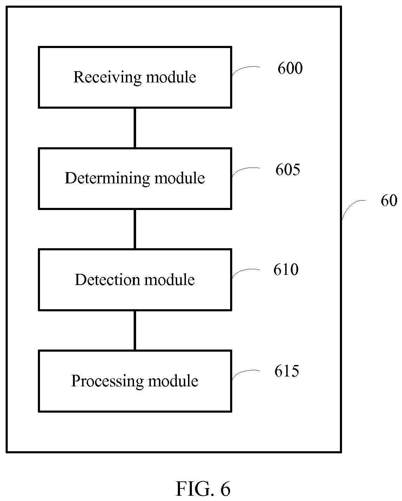

FIG. 6 is an apparatus 60 for detecting a transaction conflict according to an embodiment of the present invention. The apparatus 60 for detecting a transaction conflict may be applied to a computer system shown in FIG. 1. As shown in FIG. 6, the apparatus may include a receiving module 600, a determining module 605, a detection module 610, and a processing module 615. The receiving module 600 is configured to receive at least two operation instructions of a first transaction, where each operation instruction of the first transaction carries an address The determining module 605 is configured to determine, according to the addresses in the at least two operation instructions, memory areas to be accessed by the at least two operation instructions. The detection module 610 is configured to execute, according to a first detection policy of a first memory area of the at least two memory areas, conflict detection on at least one operation instruction that is to access the first memory area, and execute, according to a second detection policy of a second memory area of the at least two memory areas, conflict detection on at least one operation instruction that is to access the second memory area. The processing module 615 is configured to obtain a conflict detection result of the first transaction according to conflict detection results of the at least two operation instructions, where the conflict detection results of the at least two operation instructions include at least: a detection result of at least one operation instruction that is to access the first memory area and a detection result of at least one operation instruction that is to access the second memory area.

Specifically, in one case, the detection module 610 is specifically configured to use a first bloom filter bloom filter that is set for the first memory area to execute conflict detection on an address in at least one operation instruction that is to access the first memory area. The first bloom filter includes a hash value of an address range to which an address in an operation instruction that is being executed by the computer system and that accesses the first memory area belongs, where the address range to which the address in the operation instruction that accesses the first memory area belongs is determined by a detection granularity of the first detection policy. In another case, the detection module 610 is further specifically configured to use a second bloom filter that is set for the second memory area to execute conflict detection on an address in at least one operation instruction that is to access the second memory area. The second bloom filter includes a hash value of an address range to which an address in an operation instruction that is being executed by the computer system and that accesses the second memory area belongs, where the address range to which the address in the operation instruction that accesses the second memory area belongs is determined by a detection granularity of the second detection policy. The detection granularity of the second detection policy is different from the detection granularity of the first detection policy.

In an actual application, if the detection module 610 detects that an address range to which an address in one operation instruction of the at least two operation instructions of the first transaction belongs is the same as an address range to which an address in an operation instruction being executed by the computer system belongs, the processing module 615 determines that the first transaction conflicts with a transaction that is being executed by the computer system. If the detection module 610 detects that an address range to which the addresses in the at least two operation instructions of the first transaction belong is different from an address range to which an address in an operation instruction being executed by the computer system belongs, the processing module 615 determines that the first transaction does not conflict with a transaction that is being executed by the computer system.

In still another case, the receiving module 600 is further configured to receive at least two operation instructions of a second transaction, where each operation instruction of the at least two operation instructions of the second transaction carries an address; the determining module 605 is further configured to determine, according to the addresses in the at least two operation instructions of the second transaction, that the at least two operation instructions of the second transaction are to access the first memory area; the detection module 610 is further configured to execute, according to the first detection policy of the first memory area, conflict detection on the at least two operation instructions of the second transaction; and the processing module 615 is further configured to obtain a conflict detection result of the second transaction according to detection results of the at least two operation instructions of the second transaction.

In still another case, the receiving module 600 is further configured to receive at least two operation instructions of a third transaction, where each operation instruction of the at least two operation instructions of the third transaction carries an address; the determining module 605 is further configured to determine, according to the addresses in the at least two operation instructions of the third transaction, that the at least two operation instructions of the third transaction are to access the second memory area; the detection module 610 is further configured to execute, according to the second detection policy of the second memory area, conflict detection on the at least two operation instructions of the third transaction; and the processing module 615 is further configured to obtain a conflict detection result of the third transaction according to detection results of the at least two operation instructions of the third transaction.

The apparatus 60 for detecting a conflict provided in this embodiment of the present invention may execute the methods for detecting a conflict described in the embodiments of FIG. 2, FIG. 4, and FIG. 5. For detailed description of a function of each module, refer to description of the method embodiments, and details are not described herein.

It may be understood that, the embodiment shown in FIG. 6 is merely an example. For example, the module division is merely logical function division and may be other division in actual implementation. For example, a plurality of modules or components may be combined or integrated into another device, or some features may be ignored or not performed. In addition, the displayed or discussed mutual couplings or direct couplings or communication connections may be implemented by using some communications interfaces. The indirect couplings or communication connections between the modules may be implemented in electronic, mechanical, or other forms.

The modules described as separate parts may or may not be physically separate, and parts displayed as modules may or may not be physical units, may be located in one position, or may be distributed on a plurality of network units. A part or all of the modules may be selected according to actual needs to achieve the objectives of the solutions of the embodiments.

An embodiment of the present invention further provides a computer program product for data processing, including a computer-readable storage medium that stores program code, where an instruction included in the program code is used to execute the method process described in any one of the foregoing method embodiments. A person of ordinary skill in the art may understand that the foregoing storage medium may include any non-transitory (non-transitory) machine-readable medium capable of storing program code, such as a USB flash drive, a removable hard disk, a magnetic disk, an optical disc, a random-access memory (Random-Access Memory, RAM), a solid state disk (Solid State Disk, SSD), or a non-volatile memory (non-volatile memory).

It should be noted that, the embodiments provided in this application are merely exemplary. A person skilled in the art may clearly know that, for convenience and conciseness of description, in the foregoing embodiments, the embodiments emphasize different aspects, and for a part not described in detail in one embodiment, reference may be made to relevant description of another embodiment. The embodiments of the present invention, claims, and features disclosed in the accompanying drawings may exist independently, or exist in a combination. Features described in a hardware form in the embodiments of the present invention may be executed by software, and vice versa. This is not limited herein.

## Claims

1. A method for detecting a transaction conflict, wherein the method is applied to a computer system whose memory is a non-volatile memory NVM; the memory comprises at least two memory areas; the at least two memory areas have different detection policies; the method is executed by a memory controller; and the method comprises:
receiving at least two operation instructions of a first transaction, wherein each operation instruction of the first transaction carries an address;
determining, according to the addresses in the at least two operation instructions, memory areas to be accessed by the at least two operation instructions;
executing, according to a first detection policy of a first memory area of the at least two memory areas, conflict detection on at least one operation instruction that is to access the first memory area;
executing, according to a second detection policy of a second memory area of the at least two memory areas, conflict detection on at least one operation instruction that is to access the second memory area; and
obtaining a conflict detection result of the first transaction according to conflict detection results of the at least two operation instructions, wherein the conflict detection results of the at least two operation instructions comprise at least: a detection result of the at least one operation instruction that is to access the first memory area and a detection result of the at least one operation instruction that is to access the second memory area.

2. The method according to claim 1, wherein the obtaining a conflict detection result of the first transaction according to conflict detection results of the at least two operation instructions comprises:
if it is detected that an address range to which an address in one operation instruction of the at least two operation instructions of the first transaction belongs is the same as an address range to which an address in an operation instruction being executed by the computer system belongs, determining that the first transaction conflicts with a transaction that is being executed by the computer system; or
if it is detected that an address range to which the addresses in the at least two operation instructions of the first transaction belong is different from an address range to which an address in an operation instruction being executed by the computer system belongs, determining that the first transaction does not conflict with a transaction that is being executed by the computer system.

3. The method according to claim 1 or 2, wherein
the executing, according to a first detection policy of a first memory area of the at least two memory areas, conflict detection on at least one operation instruction that is to access the first memory area comprises:
executing, by using a first bloom filter bloom filter that is set for the first memory area, conflict detection on an address in the at least one operation instruction that is to access the first memory area, wherein the first bloom filter comprises a hash value of an address range to which an address in an operation instruction that is being executed by the computer system and that accesses the first memory area belongs, and the address range to which the address in the operation instruction that accesses the first memory area belongs is determined by a detection granularity of the first detection policy; and
the executing, according to a second detection policy of a second memory area of the at least two memory areas, conflict detection on at least one operation instruction that is to access the second memory area comprises:
executing, by using a second bloom filter that is set for the second memory area, conflict detection on an address in the at least one operation instruction that is to access the second memory area, wherein the second bloom filter comprises a hash value of an address range to which an address in an operation instruction that is being executed by the computer system and that accesses the second memory area belongs; the address range to which the address in the operation instruction that accesses the second memory area belongs is determined by a detection granularity of the second detection policy; and the detection granularity of the second detection policy is different from the detection granularity of the first detection policy.

4. The method according to any one of claims 1 to 3, further comprising:
receiving at least two operation instructions of a second transaction, wherein each operation instruction of the at least two operation instructions of the second transaction carries an address;
determining, according to the addresses in the at least two operation instructions of the second transaction, that the at least two operation instructions of the second transaction are to access the first memory area;
executing conflict detection on the at least two operation instructions of the second transaction according to the first detection policy of the first memory area; and
obtaining a conflict detection result of the second transaction according to detection results of the at least two operation instructions of the second transaction.

5. The method according to any one of claims 1 to 4, further comprising:
receiving at least two operation instructions of a third transaction, wherein each operation instruction of the at least two operation instructions of the third transaction carries an address;
determining, according to the addresses in the at least two operation instructions of the third transaction, that the at least two operation instructions of the third transaction are to access the second memory area;
executing conflict detection on the at least two operation instructions of the third transaction according to the second detection policy of the second memory area; and
obtaining a conflict detection result of the third transaction according to detection results of the at least two operation instructions of the third transaction.

6. A computer system, comprising:
a processor, configured to send at least two operation instructions of a first transaction to a memory controller;
a memory, configured to store data, wherein the memory is a non-volatile memory; the memory comprises at least two memory areas; and the at least two memory areas have different detection policies; and
the memory controller, configured to:
receive the at least two operation instructions of the first transaction that are sent by the processor, wherein each operation instruction of the first transaction carries an address;
determine, according to the addresses in the at least two operation instructions, memory areas to be accessed by the at least two operation instructions;
execute, according to a first detection policy of a first memory area of the at least two memory areas, conflict detection on at least one operation instruction that is to access the first memory area;
execute, according to a second detection policy of a second memory area of the at least two memory areas, conflict detection on at least one operation instruction that is to access the second memory area; and
obtain a conflict detection result of the first transaction according to conflict detection results of the at least two operation instructions, wherein the conflict detection results of the at least two operation instructions comprise at least: a detection result of the at least one operation instruction that is to access the first memory area and a detection result of the at least one operation instruction that is to access the second memory area.

7. The computer system according to claim 6, wherein the memory controller is specifically configured to:
if it is detected that an address range to which an address in one operation instruction of the at least two operation instructions of the first transaction belongs is the same as an address range to which an address in an operation instruction being executed by the computer system belongs, determine that the first transaction conflicts with a transaction that is being executed by the computer system; and
if it is detected that an address range to which the addresses in the at least two operation instructions of the first transaction belong is different from an address range to which an address in an operation instruction being executed by the computer system belongs, determine that the first transaction does not conflict with a transaction that is being executed by the computer system.

8. The computer system according to claim 6 or 7, wherein the memory controller is specifically configured to:
execute, by using a first bloom filter bloom filter that is set for the first memory area, conflict detection on an address in the at least one operation instruction that is to access the first memory area, wherein the first bloom filter comprises a hash value of an address range to which an address in an operation instruction that is being executed by the computer system and that accesses the first memory area belongs, and the address range to which the address in the operation instruction that accesses the first memory area belongs is determined by a detection granularity of the first detection policy; and
execute, by using a second bloom filter that is set for the second memory area, conflict detection on an address in the at least one operation instruction that is to access the second memory area, wherein the second bloom filter comprises a hash value of an address range to which an address in an operation instruction that is being executed by the computer system and that accesses the second memory area belongs; the address range to which the address in the operation instruction that accesses the second memory area belongs is determined by a detection granularity of the second detection policy; and the detection granularity of the second detection policy is different from the detection granularity of the first detection policy.

9. The computer system according to claims 6 to 8, wherein:
the processor is further configured to send at least two operation instructions of a second transaction to the memory controller; and
the memory controller is further configured to:
receive the at least two operation instructions of the second transaction, wherein each operation instruction of the at least two operation instructions of the second transaction carries an address;
determine, according to the addresses in the at least two operation instructions of the second transaction, that the at least two operation instructions of the second transaction are to access the first memory area;
execute conflict detection on the at least two operation instructions of the second transaction according to the first detection policy of the first memory area; and
obtain a conflict detection result of the second transaction according to detection results of the at least two operation instructions of the second transaction.

10. The method according to any one of claims 6 to 9, wherein:
the processor is further configured to send at least two operation instructions of a third transaction to the memory controller; and
the memory controller is further configured to:
receive the at least two operation instructions of the third transaction, wherein each operation instruction of the at least two operation instructions of the third transaction carries an address;
determine, according to the addresses in the at least two operation instructions of the third transaction, that the at least two operation instructions of the third transaction are to access the second memory area;
execute, according to the second detection policy of the second memory area, conflict detection on the at least two operation instructions of the third transaction; and
obtain a conflict detection result of the third transaction according to detection results of the at least two operation instructions of the third transaction.

11. An apparatus for detecting a conflict, wherein the apparatus is applied to a computer system whose memory is a non-volatile memory NVM; the memory comprises at least two memory areas; the at least two memory areas have different detection policies; and the apparatus comprises:
a receiving module, configured to receive at least two operation instructions of a first transaction, wherein each operation instruction of the first transaction carries an address;
a determining module, configured to determine, according to the addresses in the at least two operation instructions, memory areas to be accessed by the at least two operation instructions;
a detection module, configured to execute, according to a first detection policy of a first memory area of the at least two memory areas, conflict detection on at least one operation instruction that is to access the first memory area; and execute, according to a second detection policy of a second memory area of the at least two memory areas, conflict detection on at least one operation instruction that is to access the second memory area; and
a processing module, configured to obtain a conflict detection result of the first transaction according to conflict detection results of the at least two operation instructions, wherein the conflict detection results of the at least two operation instructions comprise at least: a detection result of the at least one operation instruction that is to access the first memory area and a detection result of the at least one operation instruction that is to access the second memory area.

12. The apparatus according to claim 11, wherein the processing module is specifically configured to:
if it is detected that an address range to which an address in one operation instruction of the at least two operation instructions of the first transaction belongs is the same as an address range to which an address in an operation instruction being executed by the computer system belongs, determine that the first transaction conflicts with a transaction that is being executed by the computer system; and
if it is detected that an address range to which the addresses in the at least two operation instructions of the first transaction belong is different from an address range to which an address in an operation instruction being executed by the computer system belongs, determine that the first transaction does not conflict with a transaction that is being executed by the computer system.

13. The apparatus according to claim 11 or 12, wherein the detection module is specifically configured to:
execute, by using a first bloom filter bloom filter that is set for the first memory area, conflict detection on an address in the at least one operation instruction that is to access the first memory area, wherein the first bloom filter comprises a hash value of an address range to which an address in an operation instruction that is being executed by the computer system and that accesses the first memory area belongs, and the address range to which the address in the operation instruction that accesses the first memory area belongs is determined by a detection granularity of the first detection policy; and
execute, by using a second bloom filter that is set for the second memory area, conflict detection on an address in the at least one operation instruction that is to access the second memory area, wherein the second bloom filter comprises a hash value of an address range to which an address in an operation instruction that is being executed by the computer system and that accesses the second memory area belongs; the address range to which the address in the operation instruction that accesses the second memory area belongs is determined by a detection granularity of the second detection policy; and the detection granularity of the second detection policy is different from the detection granularity of the first detection policy.

14. The method according to any one of claims 11 to 13, wherein:
the receiving module is further configured to receive at least two operation instructions of a second transaction, wherein each operation instruction of the at least two operation instructions of the second transaction carries an address;
the determining module is further configured to determine, according to the addresses in the at least two operation instructions of the second transaction, that the at least two operation instructions of the second transaction are to access the first memory area;
the detection module is further configured to execute conflict detection on the at least two operation instructions of the second transaction according to the first detection policy of the first memory area; and
the processing module is further configured to obtain a conflict detection result of the second transaction according to detection results of the at least two operation instructions of the second transaction.

15. The method according to any one of claims 11 to 14, wherein:
the receiving module is further configured to receive at least two operation instructions of a third transaction, wherein each operation instruction of the at least two operation instructions of the third transaction carries an address;
the determining module is further configured to determine, according to the addresses in the at least two operation instructions of the third transaction, that the at least two operation instructions of the third transaction are to access the second memory area;
the detection module is further configured to execute conflict detection on the at least two operation instructions of the third transaction according to the second detection policy of the second memory area; and
the processing module is further configured to obtain a conflict detection result of the third transaction according to detection results of the at least two operation instructions of the third transaction.
